# EUROPEAN PATENT APPLICATION

(11) **EP 4 439 727 A1**
(43) Date of publication of application: **02.10.2024**
(21) Application number: 24163320.5
(22) Date of filing: 13.03.2024
(51) Int. Cl.: H01M 4/525, H01M 10/0525, H01M 10/54

(54) **PRODUCTION METHOD FOR RECYCLED MATERIAL AND PRODUCTION SYSTEM**

(30) Priority: 29.03.2023 JP 2023052935
(71) Applicant: TOYOTA JIDOSHA KABUSHIKI KAISHA, Aichi-ken 471-8571 (JP)
(72) Inventor: YOKOYAMA, Tomohiro, Toyota-shi, 471-8571 (JP); MAHARA, Takanori, Toyota-shi, 471-8571 (JP)
(74) Representative: D Young & Co LLP

(57) **Abstract**

A method of producing a recycled material comprises, in the following order, "(a) preparing an electrode (10) including a base material (11) and an electrode composite material (12)", "(b) bringing the electrode (10) into contact with an aqueous ammonia solution (20)", "(c) separating the electrode composite material (12) from the base material (11)", and "(d) drying the electrode composite material (12)". In the (a), the electrode composite material (12) is adhered to at least part of the base material (11). The base material (11) includes aluminum. The electrode composite material (12) includes an active material.

## Description

### CROSS REFERENCE TO RELATED APPLICATIONS

This nonprovisional application is based on Japanese Patent Application No. 2023-052935 filed on March 29, 2023, with the Japan Patent Office, the entire contents of which are hereby incorporated by reference.

### BACKGROUND OF THE DISCLOSURE

### Field

The present disclosure relates to a production method for a recycled material and a production system.

### Description of the Background Art

Japanese Patent Laying-Open No. 2017-084681 discloses a method for collecting a positive electrode material.

### SUMMARY OF THE DISCLOSURE

An electrode includes various recyclable materials. Researches have been underway to collect recyclable materials from an electrode to produce recycled materials.

An electrode includes a base material and an electrode composite material. The electrode composite material is adhered to the base material. In early steps of recycling processes, it is necessary to separate the electrode composite material from the base material. However, because the electrode composite material is strongly adhered to the base material, it is not easy to separate the electrode composite material from the base material.

For example, heating an electrode to facilitate separation of an electrode composite material from a base material is suggested (see Japanese Patent Laying-Open No. 2017-084681, for example). The electrode composite material may include an active material, a binder, and the like. When the electrode composite material is exposed to high temperatures, constituent components such as the binder may form a solid solution with the active material. As a result, the crystal structure of the active material may be altered, for example. When the crystal structure is altered greatly, it may be necessary to firstly break down the active material into raw materials (such as sulfate, oxide, metal, and the like) and then re-synthesize the active material. This requires performing the process of active material synthesis backward, namely, in the order of sulfate, oxide, and then metal. As the backward procedure of the synthesis process proceeds, the amount of carbon dioxide generated from the recycling of the active material may increase.

On the other hand, when the crystal structure is altered only slightly, recycling of the active material may be achieved by easy and simple treatments. This recycling process is also called "direct recycling". From the viewpoint of reducing environmental burdens, direct recycling is desirable.

In light of these circumstances, an object of the present disclosure is to separate an electrode composite material from a base material with reduced alteration of the crystal structure of an active material.

Hereinafter, the technical configuration and effects of the present disclosure will be described. It should be noted that the action mechanism according to the present specification includes presumption. The action mechanism does not limit the technical scope of the present disclosure.
1. A method of producing a recycled material comprises the following (a) to (d) in the following order:
   (a) preparing an electrode including a base material and an electrode composite material;
   (b) bringing the electrode into contact with an aqueous ammonia solution;
   (c) separating the electrode composite material from the base material; and
   (d) drying the electrode composite material.

In the (a), the electrode composite material is adhered to at least part of the base material. The base material includes aluminum. The electrode composite material includes an active material.

The surface of the base material is covered with an oxide film (alumite). The oxide film may be formed by spontaneous oxidation of Al. The electrode composite material is adhered to the surface of the base material (the oxide film). In the electrode, many permeation pathways are formed which communicate with the interface between the electrode composite material and the base material. When the electrode comes into contact with the aqueous ammonia solution, the aqueous ammonia solution may permeate to reach the interface between the electrode composite material and the base material. At the interface, ammonia may react with the alumite to form an ammonia complex. The formation of this ammonia complex may greatly reduce the adhesion force between the base material and the electrode composite material. Due to the reduction of the adhesion force, heating may be no longer necessary to peel the electrode composite material off from the base material. That is, the electrode composite material may be separated from the base material with reduced alteration of the crystal structure of the active material.

In addition, due to the reduction of the adhesion force, the electrode composite material may be peeled off from the base material in a reduced amount of time. Due to the reduction of the treatment time, reactions of the aqueous ammonia solution with Al (such as Al dissolution, hydrogen gas generation, and the like) may also be reduced. That is, the base material may be collected in an easily-recyclable form.

If a strong alkaline aqueous solution such as a sodium hydroxide solution is used instead of an aqueous ammonia solution, for example, dissolution of Al can proceed even in a short time.

2. The method of producing a recycled material according to "1" above may include the following configuration, for example. The aqueous ammonia solution includes ammonia in a mass fraction from 1 to 28%.

Hereinafter, the concentration of the aqueous ammonia solution refers to the mass fraction of ammonia, unless otherwise specified. An aqueous ammonia solution at a concentration within the range of 1 to 28% is easy to obtain or to prepare. In addition, at a concentration within the range of 1 to 28%, unfavorable reactions tend not to occur. Examples of the unfavorable reactions include Al dissolution, hydrogen gas generation, Li elution, and the like.

3. The method of producing a recycled material according to "1" or "2" above may include the following configuration, for example. The active material includes a lithium-metal composite oxide.

For example, when the electrode composite material includes a water-soluble binder, separation of the electrode composite material from the base material can be carried out in water. However, when the active material (a lithium-metal composite oxide) comes into contact with a large amount of water, Li may elute into water. That is, the composition of the active material may be altered. In addition, due to the elution of Li, an aqueous alkaline solution is formed. For collecting Li from the aqueous alkaline solution and for disposing the aqueous alkaline solution, for example, the processing cost can increase.

Aqueous ammonia solution is alkaline by nature. It is conceivable that the driving force for Li elution reactions is small in aqueous ammonia solution. In other words, it is conceivable that Li elution reactions tend not to proceed in aqueous ammonia solution. As a result, an active material is expected to be collected with small compositional alterations. In addition, the processing cost is expected to be reduced.

4. The method of producing a recycled material according to any one of" 1" to "3" above may include the following configuration, for example. The (b) includes immersing the electrode in the aqueous ammonia solution.

The method for bringing the electrode into contact with the aqueous ammonia solution is not particularly limited. Examples of the contacting method include immersion, application, spraying, and the like.

5. The method of producing a recycled material according to any one of" 1" to "4" above may include the following configuration, for example. The (b) includes applying the aqueous ammonia solution to the electrode.

6. The method of producing a recycled material according to any one of" 1" to "5" above may include the following configuration, for example. The (b) includes spraying the aqueous ammonia solution on the electrode.

7. The method of producing a recycled material according to any one of" 1" to "6" above may include the following configuration, for example. The (c) includes applying momentum to the electrode composite material.

With reduction of the adhesion force between the electrode composite material and the base material, easy and simple application of momentum (such as application of vibration, for example) may be enough to peel the electrode composite material off from the base material.

8. The method of producing a recycled material according to any one of" 1" to "7" above may include the following configuration, for example. The (d) includes collecting ammonia from gas generated during the drying.

From the ammonia thus collected, an aqueous ammonia solution may be produced again. This aqueous ammonia solution may be reused in the (b).

9. The method of producing a recycled material according to any one of" 1" to "8" above may further include the following (e) and (f) in the following order:
(e) separating the active material from the electrode composite material; and
(f) recycling the active material.

For example, the active material may be isolated from the electrode composite material. After isolated, the active material may be subjected to recycling treatment. In other words, a recycled active material may be produced. Because the crystal structure is altered only slightly from the initial state of the active material, recycling of the active material is expected to be achieved by easy and simple treatments. For example, recycling of the active material may be achieved by supplying Li to the active material.

10. A production system produces a recycled material from an electrode including a base material and an electrode composite material. The production system comprises a contacting apparatus, a separating apparatus, and a drying apparatus. The contacting apparatus is to bring the electrode into contact with an aqueous ammonia solution. The separating apparatus is to separate the electrode composite material from the base material after the electrode is brought into contact with the aqueous ammonia solution. The drying apparatus is to dry the electrode composite material after the electrode composite material is separated from the base material.

11. The production system according to "10" above may further comprise a collecting apparatus, for example. The collecting apparatus is to collect ammonia from gas generated in the drying apparatus.

In the following, an embodiment of the present disclosure (which may also be simply called "the present embodiment" hereinafter) will be described. It should be noted that the present embodiment does not limit the technical scope of the present disclosure. The present embodiment is illustrative in any respect. The present embodiment is non-restrictive. The technical scope of the present disclosure encompasses any modifications within the meaning and the scope equivalent to the terms of the claims. For example, it is originally planned that any configurations of the present embodiment and the present example may be optionally combined.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a schematic flowchart illustrating a method of producing a recycled material according to the present embodiment.
Fig. 2 is a conceptual view illustrating a production system according to the present embodiment.
Fig. 3 is a conceptual view illustrating a first system.
Fig. 4 is a conceptual view illustrating a second system.

### DESCRIPTION OF THE PREFERRED EMBODIMENTS

### <Description of Terms>

A description will be provided for terms that are used in the present specification. Terms that are not described here may be described in the specification when the term is used.

Expressions such as "comprise", "include", and "have", and other similar expressions (such as "be composed of", for example) are open-ended expressions. In an open-ended expression, in addition to an essential component, an additional component may or may not be further included. The expression "consist of" is a closed-end expression. However, even when a closed-end expression is used, impurities present under ordinary circumstances as well as an additional element irrelevant to the technique according to the present disclosure are not excluded. The expression "consist essentially of" is a semiclosed-end expression. A semiclosed-end expression tolerates addition of an element that does not substantially affect the fundamental, novel features of the technique according to the present disclosure.

Expressions such as "may" and "can" are not intended to mean "must" (obligation) but rather mean "there is a possibility" (tolerance).

Regarding a plurality of steps, operations, processes, and the like that are included in various methods, the order for implementing those things is not limited to the described order, unless otherwise specified. For example, a plurality of steps may proceed simultaneously. For example, a plurality of steps may be implemented in reverse order.

A singular form also includes its plural meaning, unless otherwise specified. For example, "a particle" may mean not only "one particle" but also "a plurality of particles (a particle group)" and "a group of particles (powder)".

Any geometric term (such as "parallel", "vertical", and "orthogonal", for example) should not be interpreted solely in its exact meaning. For example, "parallel" may mean a geometric state that is deviated, to some extent, from exact "parallel". Any geometric term herein may include tolerances and/or errors in terms of design, operation, production, and/or the like. The dimensional relationship in each figure may not necessarily coincide with the actual dimensional relationship. The dimensional relationship (in length, width, thickness, and the like) in each figure may have been changed for the purpose of assisting understanding for the readers. Further, a part of a given configuration may have been omitted.

A numerical range such as "from m to n%" includes both the upper limit and the lower limit, unless otherwise specified. That is, "from m to n%" means a numerical range of "not less than m% and not more than n%". Moreover, "not less than m% and not more than n%" includes "more than m% and less than n%". Further, any numerical value selected from a certain numerical range may be used as a new upper limit or a new lower limit. For example, any numerical value from a certain numerical range may be combined with any numerical value described in another location of the present specification or in a table or a drawing to set a new numerical range.

All the numerical values are regarded as being modified by the term "about". The term "about" may mean ±5%, ±3%, ±1%, and/or the like, for example. Each numerical value may be an approximate value that can vary depending on the implementation configuration of the technique according to the present disclosure. Each numerical value may be expressed in significant figures. Unless otherwise specified, each measured value may be the average value obtained from multiple measurements performed. The number of measurements may be 3 or more, or may be 5 or more, or may be 10 or more. Generally, the greater the number of measurements is, the more reliable the average value is expected to be. Each measured value may be rounded off based on the number of the significant figures. Each measured value may include an error occurring due to an identification limit of the measurement apparatus, for example.

A stoichiometric composition formula represents a typical example of a compound. A compound may have a non-stoichiometric composition. For example, "Al₂O₃" is not limited to a compound where the ratio of the amount of substance (molar ratio) is "Al/O=2/3". "Al₂O₃" represents a compound that includes Al and O in any ratio of the amount of substance, unless otherwise specified. Further, the compound may be doped with a trace element, for example. Some of Al and/or O may be replaced by another element.

"Derivative" refers to a compound that is derived from its original compound by at least one partial modification selected from the group consisting of substituent introduction, atom replacement, oxidation, reduction, and other chemical reactions. The position of modification may be one position, or may be a plurality of positions. "Substituent" may include, for example, at least one selected from the group consisting of alkyl group, alkenyl group, alkynyl group, cycloalkyl group, unsaturated cycloalkyl group, aromatic group, heterocyclic group, halogen atom (F, Cl, Br, I, etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like. These substituents may be further substituted. When there are two or more substituents, these substituents may be the same as one another or may be different from each other. A plurality of substituents may be bonded together to form a ring. A derivative of a polymer compound (a resin material) may also be called "a modified product".

"Copolymer" includes at least one selected from the group consisting of unspecified-type, statistical-type, random-type, alternating-type, periodic-type, block-type, and graft-type.

"D50" refers to a particle size in volume-based particle size distribution (cumulative distribution) at which the cumulative value reaches 50%. The particle size distribution may be measured by laser diffraction.

"Recycled material" refers to any material, in general, that may be collected from an electrode. The recycled material is not limited to an active material. For example, a base material (such as an Al foil, for example) is also a recycled material. An electrode composite material is also a recycled material. Uses of recycled materials are not limited to use in batteries. A recycled material may be used in applications other than batteries.

"Electrode" collectively refers to a positive electrode, a negative electrode, and a bipolar electrode. In other words, the electrode may be a positive electrode, a negative electrode, or a bipolar electrode. For example, the electrode may be an electrode of a lithium-ion battery. For example, the lithium-ion battery may be a liquid-type battery, a polymer battery, or an all-solid-state battery. As long as the base material of the electrode includes Al, the battery is not limited to a lithium-ion battery.

"Lithium-metal composite oxide" refers to a compound that includes Li, a metal (except for Li), and oxygen. For example, a lithium-metal composite oxide may include a layered oxide, a polyanion compound, and/or the like.

### <Method of Producing Recycled Material>

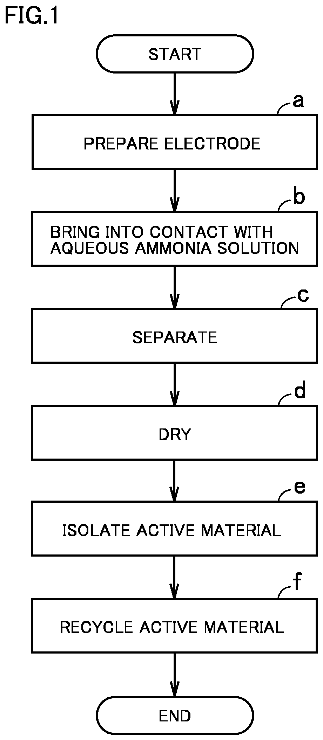

Fig. 1 is a schematic flowchart illustrating a method of producing a recycled material according to the present embodiment. Hereinafter, "the method of producing a recycled material according to the present embodiment" may also be simply called "the present production method". The present production method includes "(a) preparing an electrode", "(b) bringing into contact with an aqueous ammonia solution", "(c) separating", and "(d) drying". The present production method may further include "(e) isolating an active material", "(f) recycling the active material", and the like, for example.

### <(a) Preparing Electrode>

The present production method includes preparing an electrode. The electrode may be obtained from any route. For example, a battery in a discharged state may be disassembled and an electrode may be collected from the battery. For example, the battery may be a disposed one, or may be a defective one. The reason of the disposal of the battery and the cause of the defect are not particularly limited. For example, the reason of the disposal and the like may be capacity degradation, voltage decrease, micro short-circuiting, resistance increase, and/or the like. For example, an electrode that was weeded out as a defective product during battery production may be collected. The cause of the defect of the electrode is not particularly limited. For example, the cause of the defect may be impurity contamination, insufficient coating weight, and/or the like.

The electrode includes a base material and an electrode composite material. The base material may have any configuration. For example, the base material may be in sheet form, plate form, and/or the like. For example, the base material may include a metal foil, a metal porous body, and/or the like. The base material includes Al. For example, the base material may include a pure Al foil, an Al alloy foil, and/or the like. For example, the base material may include at least one selected from the group consisting of 1XXX materials, 2XXX materials, 3XXX materials, 4XXX materials, 5XXX materials, 6XXX materials, 7XXX materials, and 8XXX materials. For example, "1XXX materials" refer to Al materials of Alloy Nos. 1XXX specified by "JIS H 4000". For example, the base material may have a thickness from 5 to 50 µm. The base material may have a monolayer structure, or may have a multilayer structure. For example, the base material may include a clad material. For example, the clad material may be formed by affixing a Cu foil to an Al foil.

The electrode composite material is adhered to at least part of the base material. The electrode composite material may be adhered to all over the base material. The electrode composite material may be adhered to a part of a surface of the base material. The electrode composite material may be adhered to only one side of the base material. The electrode composite material may be adhered to both sides of the base material. The electrode composite material may form a layer. That is, an electrode composite material layer may be formed on a surface of the base material. For example, the electrode composite material layer may have a thickness from 10 to 1000 µm.

The electrode composite material includes an active material. For example, the active material may include a lithium-metal composite oxide. The electrode composite material may further include a conductive material, a binder, a solid electrolyte, and/or the like. The active material is a particle group. The gaps between the particles serve as pathways for liquid permeation. For example, the active material may have a D50 from 1 to 30 µm. The details of the various materials that may be included in the electrode composite material will be described below.

### <(b) Bringing into Contact with Aqueous Ammonia Solution>

The present production method includes bringing the electrode into contact with an aqueous ammonia solution. With the electrode brought into contact with an aqueous ammonia solution, at least part of the aqueous ammonia solution may permeate to reach the interface between the electrode composite material and the base material. This is because the electrode includes pathways for liquid permeation. The permeation of the aqueous ammonia solution is expected to proceed quickly. At the surface of the base material, the aqueous ammonia solution may react with an oxide film (alumite) to form an ammonia complex. The formation of this ammonia complex may greatly reduce the adhesion force between the base material and the electrode composite material.

The method of contacting is not particularly limited. For example, the electrode may be immersed in the aqueous ammonia solution. For example, the electrode may be put in the aqueous ammonia solution. For facilitating the contact, the electrode may be cut into small pieces before being put into the aqueous ammonia solution, for example. For facilitating the contact, the aqueous ammonia solution may be stirred, for example.

For example, the aqueous ammonia solution may be applied to the electrode. For example, application of the aqueous ammonia solution may be carried out with a roller coater and/or the like. For example, a sponge roller and/or the like may be impregnated with the aqueous ammonia solution. The sponge roller may be rotated and pushed against a surface of the electrode (an electrode composite material), and thereby the aqueous ammonia solution may be applied to the electrode. Application with a roller coater may be suitable when the electrode has a hoop shape, for example.

For example, the aqueous ammonia solution may be sprayed on the electrode. For example, spraying of the aqueous ammonia solution may be carried out with a spray coater and/or the like.

The aqueous ammonia solution includes ammonia and water. The ammonia is dissolved in the water. At normal temperature (20±5°C), the concentration of the saturated solution is about 35%. For example, the aqueous ammonia solution may have a concentration from 0.1 to 35%. For example, the aqueous ammonia solution may have a concentration from 1 to 28%. An aqueous ammonia solution at a concentration within the range of 1 to 28% is easy to obtain or to prepare. In addition, at a concentration within the range of 1 to 28%, unfavorable reactions tend not to occur. Examples of the unfavorable reactions include Al dissolution, H₂ gas generation, Li elution, and the like. For example, the aqueous ammonia solution may include 1 to 28% ammonia, with the remainder being made up of water. In addition to water, the remainder may include any additive, inevitable impurities, and/or the like, for example. The concentration of the aqueous ammonia solution may be 3% or more, or 5% or more, or 10% or more, or 15% or more, or 20% or more, for example. The concentration of the aqueous ammonia solution may be 25% or less, or 20% or less, or 15% or less, or 10% or less, or 5% or less, or 3% or less, for example.

### <(c) Separating>

The present production method includes separating the electrode composite material from the base material. Because the adhesion force is reduced due to the contact with the aqueous ammonia solution, peeling of the electrode composite material off from the base material is expected to proceed smoothly.

The separation method is not particularly limited. For example, for the purpose of facilitating the separation, momentum may be applied to the electrode composite material. Momentum may be applied by any method. For example, at least one selected from the group consisting of vibration, contacting, feeding, stirring, and sonic wave may be applied to the mixture (the aqueous ammonia solution and the electrode). The "contacting" herein refers to bringing an object into physical contact with the target. The contacting includes scraping the electrode composite material off with a scraper, and the like, for example.

After separation, both the electrode composite material and the base material may be collected. The collection method is not particularly limited. For example, two-step filtration may be carried out. For example, a first mixture (the electrode composite material, the base material, and the aqueous ammonia solution) may be filtered through a screen filter and/or the like, for example, to collect the base material. With the base material thus separated, a second mixture (the electrode composite material and the aqueous ammonia solution) is formed. The second mixture may be filtered with the use of a cakeless filtration apparatus and/or the like, for example, to collect the electrode composite material.

The filtrate (the aqueous ammonia solution) may be reused. More specifically, the filtrate may be used as the aqueous ammonia solution in "(b) bringing into contact with an aqueous ammonia solution". For example, the filtrate may include ammonium carbonate, ammonium fluoride, and/or the like. For example, the ammonium carbonate, the ammonium fluoride, and/or the like may be derived from a binder, an electrolyte solution, and/or the like. The ammonium carbonate, the ammonium fluoride, and/or the like may form a complex with Al. That is, the ammonium carbonate, the ammonium fluoride, and/or the like are expected to facilitate the separation of the electrode composite material from the base material.

The collection method is not limited to filtration through a filter. For example, the electrode composite material, the base material, and the aqueous ammonia solution may be individually collected with the use of a cyclone separating apparatus, a specific-gravity separating apparatus, and/or the like. In the case where the base material is separated from the aqueous ammonia solution in a short time, reactions of Al with the aqueous ammonia solution may be reduced. For example, the base material may be separated from the aqueous ammonia solution (bulk) in 5 minutes.

### <(d) Drying>

The present production method includes drying the electrode composite material. The drying may be carried out in such a manner that the entire amount of the aqueous ammonia solution adhered to the electrode composite material can be volatilized. With the entire amount of the aqueous ammonia solution being thus removed, rinsing processes such as rinsing with water may be omitted or simplified.

The drying method is not particularly limited. For example, drying may be carried out with the use of at least one selected from the group consisting of hot air, infrared radiation, and reduced pressure. The lower the drying temperature is, the more reduced the alteration of the crystal structure is expected to be. For example, the drying temperature may be 200°C or less, or 150°C or less, or 120°C or less. For example, the drying temperature may be 60°C or more, or 80°C or more, or 100°C or more. The "drying temperature" refers to the highest temperature of the work during drying.

The present production method may include collecting ammonia from gas generated during the drying. The ammonia thus collected may be dissolved in water to produce an aqueous ammonia solution. For example, reflux may be performed to collect a high-concentration aqueous ammonia solution. The high-concentration aqueous ammonia solution may be diluted for concentration adjustment. The aqueous ammonia solution may be reused in "(b) bringing into contact with an aqueous ammonia solution". With the aqueous ammonia solution thus reused, the processing cost is expected to be reduced.

### <(e) Isolating Active Material>

The present production method may include separating the active material from the electrode composite material. For example, the active material may be isolated by oxidative degradation of the binder, the conductive material, and the like.

### <(f) Recycling Active Material>

The present production method may include recycling the active material. In the present production method, the crystal structure is altered only slightly, so recycling of the active material is expected to be achieved by easy and simple treatments. For example, a mixture of the active material and a lithium compound (lithium source) may be heated to supply Li to the active material. For example, the lithium compound may include lithium hydroxide, lithium carbonate, and/or the like.

### <Production System>

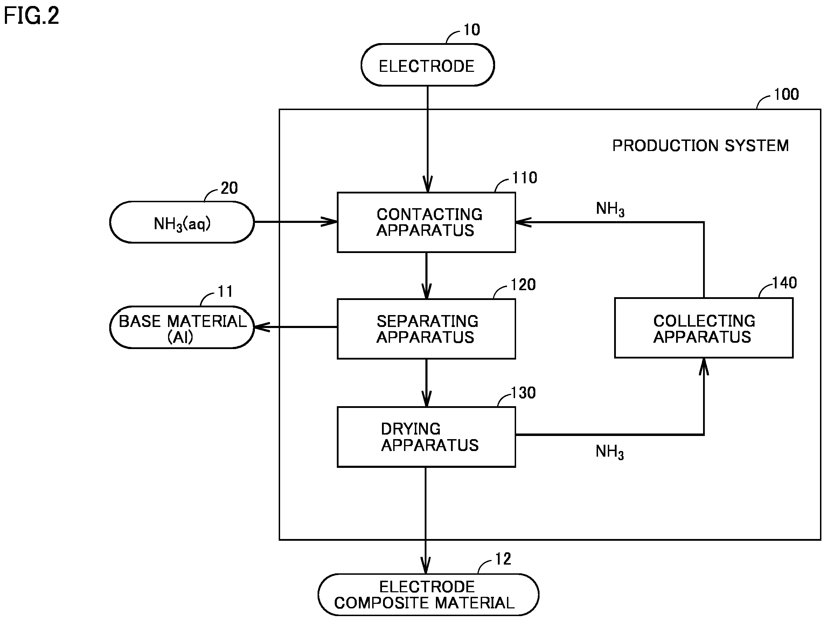

Fig. 2 is a conceptual view illustrating a production system according to the present embodiment. Hereinafter, "the production system according to the present embodiment" may also be simply called "the present system". A present system 100 includes a contacting apparatus 110, a separating apparatus 120, and a drying apparatus 130. For example, present system 100 may further include a collecting apparatus 140, a transfer apparatus (not illustrated), and/or the like. Each apparatus that constitutes present system 100 may be independent of and separated from each other. The plurality of apparatuses may be integrated inside present system 100 to constitute a single apparatus.

Contacting apparatus 110 brings an electrode 10 into contact with an aqueous ammonia solution 20. For example, contacting apparatus 110 may include a liquid tank, a stirring apparatus, and the like. The liquid tank stores aqueous ammonia solution 20. The stirring apparatus stirs aqueous ammonia solution 20. For example, contacting apparatus 110 may include an application apparatus and the like. For example, contacting apparatus 110 may include a roller coater, a spray coater, and/or the like.

Separating apparatus 120 separates an electrode composite material 12 from a base material 11 after electrode 10 is brought into contact with aqueous ammonia solution 20. For example, separating apparatus 120 may include a screen filter, a disk filter, a rotary filter, a doctor blade, a scraper, a cyclone separating apparatus, a specific-gravity separating apparatus, and/or the like.

Drying apparatus 130 dries electrode composite material 12 after electrode composite material 12 is separated from base material 11. For example, drying apparatus 130 may include a hot-air drying apparatus, an infrared drying apparatus, a reduced-pressure apparatus, and/or the like.

Collecting apparatus 140 collects ammonia from gas generated in drying apparatus 130. For example, collecting apparatus 140 may include a reflux apparatus and/or the like. Collecting apparatus 140 may prepare an aqueous ammonia solution from the ammonia thus collected. Collecting apparatus 140 may include a circulation apparatus and/or the like. The circulation apparatus may supply the aqueous ammonia solution to contacting apparatus 110.

The transfer apparatus may transfer the work between the apparatuses. For example, the transfer apparatus may transfer the work in a roll-to-roll mode.

### <First System>

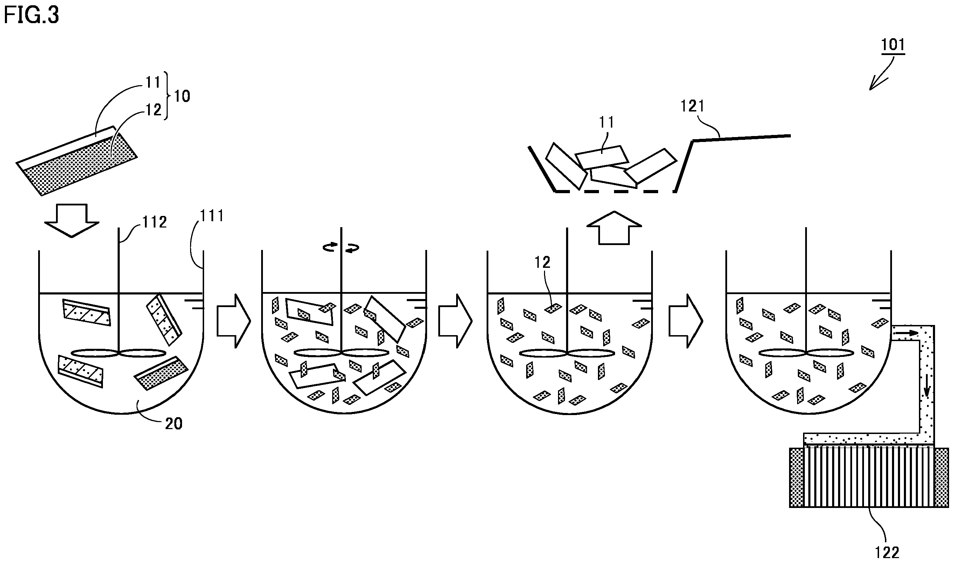

Fig. 3 is a conceptual view illustrating a first system. Present system 100 (see Fig. 2) may include a first system 101. First system 101 includes a liquid tank 111, a stirring apparatus 112, a screen filter 121, and a filtration apparatus 122. Liquid tank 111 and stirring apparatus 112 constitute contacting apparatus 110 (see Fig. 2). Screen filter 121 and filtration apparatus 122 constitute separating apparatus 120 (see Fig. 2).

First system 101 may operate in the manner described below. For example, a battery in a discharged state may be disassembled and electrode 10 may be collected. Electrode 10 includes base material 11 and electrode composite material 12.

In liquid tank 111, aqueous ammonia solution 20 is stored. Electrode 10 is immersed in aqueous ammonia solution 20 in liquid tank 111, and thereby electrode 10 comes into contact with aqueous ammonia solution 20. Stirring apparatus 112 stirs the mixture to facilitate permeation of aqueous ammonia solution 20 (facilitate contact with base material 11). In addition, stirring apparatus 112 may apply momentum to the work. With stirring apparatus 112 stirring the mixture, peeling of electrode composite material 12 may also be facilitated. Electrode composite material 12 thus peeled may be pulverized in the liquid. The pulverized electrode composite material 12 may be thus dispersed in the liquid to form a slurry.

After electrode composite material 12 is peeled off from base material 11, screen filter 121 may filter base material 11. In addition, filtration apparatus 122 may filter electrode composite material 12. For example, filtration apparatus 122 may be of dead-end filtration mode or of cross-flow filtration mode. Electrode composite material 12 may be dried by a drying apparatus (not illustrated), and thereby the entire amount of the aqueous ammonia solution may be volatilized.

### <Second System>

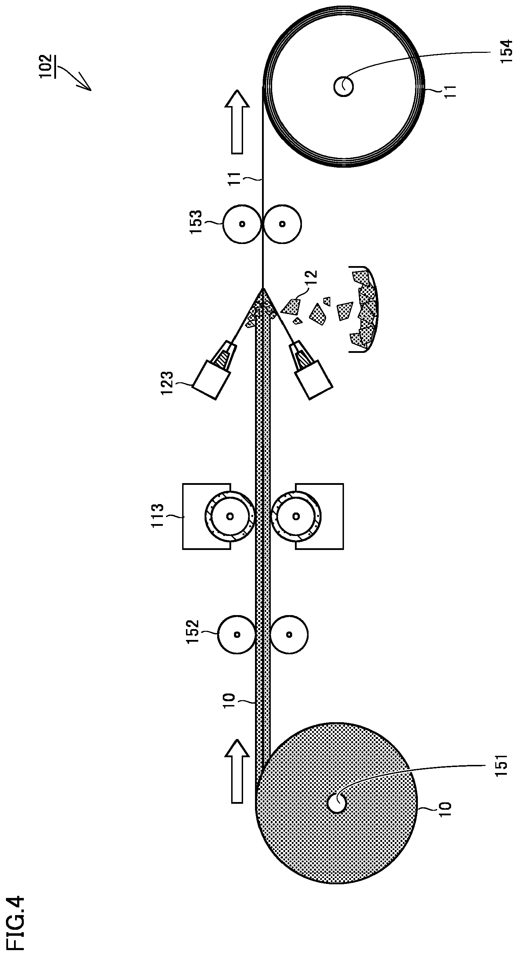

Fig. 4 is a conceptual view illustrating a second system. Present system 100 (see Fig. 2) may include a second system 102. Second system 102 includes an application apparatus 113, a peeling apparatus 123, and a winding apparatus.

Second system 102 may operate in the manner described below. For example, electrode 10 that was weeded out as a defective product during production of a battery is collected. Electrode 10 forms a hoop. For example, electrode 10 may be wound around a bobbin.

The winding apparatus corresponds to the transfer apparatus. The winding apparatus transfers the work. The winding apparatus may apply momentum to the work. The winding apparatus includes a feed roller 151, a first touch roller 152, a second touch roller 153, and a take-up roller 154. Feed roller 151 feeds electrode 10, and take-up roller 154 takes up base material 11. Power may be applied to both the feed roller 151 and the take-up roller 154. Power may be applied only to take-up roller 154. First touch roller 152 and second touch roller 153 may adjust the difference in tension between the feeding side and the taking-up side.

Application apparatus 113 constitutes contacting apparatus 110 (see Fig. 2). For example, application apparatus 113 may include a sponge roller and a fountain. The sponge roller is impregnated with the aqueous ammonia solution. The fountain may supply the aqueous ammonia solution to the sponge roller so as to maintain the amount of the aqueous ammonia solution impregnating the sponge roller to fall within a certain range. The sponge roller comes into contact with electrode 10, and thereby the aqueous ammonia solution is applied to the surface of electrode 10. A pair of sponge rollers may apply the aqueous ammonia solution to both sides of electrode 10 at the same time.

Peeling apparatus 123 constitutes separating apparatus 120 (see Fig. 2). For example, peeling apparatus 123 may include a doctor blade and/or the like. Peeling apparatus 123 is capable of peeling electrode composite material 12 by contact (external force). For example, a pair of doctor blades may scrape electrode composite material 12 off from both sides at the same time. After scraped off, electrode composite material 12 may be dried by a drying apparatus (not illustrated). By the drying, the entire amount of the aqueous ammonia solution may be volatilized. After electrode composite material 12 is peeled off, base material 11 may be collected by take-up roller 154.

### <Electrode Composite Material>

In the following, the details of the various materials that may be included in the electrode composite material will be described. For example, the electrode material may include a binder in a mass fraction from 0.1 to 10% and a conductive material in a mass fraction from 0 to 10%, with the remainder being made up of the active material. In addition to the active material, the remainder may include a solid electrolyte, various additives, inevitable impurities, and/or the like. For example, the solid electrolyte may include Li, sulfur, phosphorus, and/or the like.

### <Active Material>

The active material causes an electrode reaction to occur. The active material may be a positive electrode active material, or may be a negative electrode active material. The electrode composite material may include a single type of active material, or may include multiple types of active material. For example, the active material may include a lithium-metal composite oxide. The crystal structure of the lithium-metal composite oxide is not particularly limited.

For example, the lithium-metal composite oxide may include a crystal structure that belongs to a space group R-3m and/or the like. For example, a compound represented by the general formula "LiMO₂" may have a crystal structure that belongs to a space group R-3m. For example, the lithium-metal composite oxide may have a composition of the following formula (1).

Li₁₋ₐNiₓM₁₋ₓO₂ (1)

In the above formula, the relationships of -0.5≤a≤0.5, 0≤x≤1 are satisfied.

M may include, for example, at least one selected from the group consisting of Co, Mn, and Al.

In the above formula (1), the relationship of 0<x≤0.1, 0.1≤x≤0.2, 0.2≤x≤0.3, 0.3≤x≤0.4, 0.4≤x≤0.5, 0.5≤x≤0.6, 0.6≤x≤0.7, 0.7≤x≤0.8, 0.8≤x≤0.9, or 0.9≤x≤1 may be satisfied, for example. The relationship of -0.4≤a≤0.4, -0.3≤a≤0.3, -0.2≤a≤0.2, or - 0.1≤a≤0.1 may be satisfied, for example.

For example, LiMO₂ may include at least one selected from the group consisting of LiCoO₂, LiMnO₂, LiNi_{0.9}Co_{0.1}O₂, LiNi_{0.9}Mn_{0.1}O₂, and LiNiO₂.

For example, the lithium-metal composite oxide may have a composition of the following formula (2). A compound having the composition of the following formula (2) may also be called "NCM".

Li₁₋ₐNiₓCo_{y}Mn_{z}O₂ (2)

In the above formula, the relationships of -0.5≤a≤0.5, 0<x<1, 0<y<1, 0<z<1, x+y+z=1 are satisfied.

In the above formula (2), the relationship of 0<x≤0.1, 0.1≤x≤0.2, 0.2≤x≤0.3, 0.3≤x≤0.4, 0.4≤x≤0.5, 0.5≤x≤0.6, 0.6≤x≤0.7, 0.7≤x≤0.8, 0.8≤x≤0.9, or 0.9≤x<1 may be satisfied, for example.

In the above formula (2), the relationship of 0<y≤0.1, 0.1≤y≤0.2, 0.2≤y≤0.3, 0.3≤y≤0.4, 0.4≤y≤0.5, 0.5≤y≤0.6, 0.6≤y≤0.7, 0.7≤y≤0.8, 0.8≤y≤0.9, or 0.9≤y<1 may be satisfied, for example.

In the above formula (2), the relationship of 0<z≤0.1, 0.1≤z≤0.2, 0.2≤z≤0.3, 0.3≤z≤0.4, 0.4≤z≤0.5, 0.5≤z≤0.6, 0.6≤z≤0.7, 0.7≤z≤0.8, 0.8≤z≤0.9, or 0.9≤z<1 may be satisfied, for example.

NCM may include at least one selected from the group consisting of LiNi_{1/3}Co_{1/3}Mn_{1/3}O₂, LiNi_{0.4}Co_{0.3}Mn_{0.3}O₂, LiNi_{0.3}Co_{0.4}Mn_{0.3}O₂, LiNi_{0.3}Co_{0.3}Mn_{0.4}O₂, LiNi_{0.5}Co_{0.2}Mn_{0.3}O₂, LiNi_{0.5}Co_{0.3}Mn_{0.2}O₂, LiNi_{0.5}Co_{0.4}Mn_{0.1}O₂, LiNi_{0.5}Co_{0.1}Mn_{0.4}O₂, LiNi_{0.6}Co_{0.2}Mn_{0.2}O₂, LiNi_{0.6}Co_{0.3}Mn_{0.1}O₂, LiNi_{0.6}Co_{0.1}Mn_{0.3}O₂, LiNi_{0.7}Co_{0.1}Mn_{0.2}O₂, LiNi_{0.7}Co_{0.2}Mn_{0.1}O₂, LiNi_{0.8}Co_{0.1}Mn_{0.1}O₂, and LiNi_{0.9}Co_{0.05}Mn_{0.05}O₂, for example.

For example, the lithium-metal composite oxide may have a composition of the following formula (3). A compound having the composition of the following formula (3) may also be called "NCA".

Li₁₋ₐNiₓCo_{y}Al_{z}O₂ (3)

In the above formula, the relationships of -0.5≤a≤0.5, 0<x<1, 0<y<1, 0<z<1, x+y+z=1 are satisfied.

In the above formula (3), the relationship of 0<x≤0.1, 0.1≤x≤0.2, 0.2≤x≤0.3, 0.3≤x≤0.4, 0.4≤x≤0.5, 0.5≤x≤0.6, 0.6≤x≤0.7, 0.7≤x≤0.8, 0.8≤x≤0.9, or 0.9≤x<1 may be satisfied, for example.

In the above formula (3), the relationship of 0<y≤0.1, 0.1≤y≤0.2, 0.2≤y≤0.3, 0.3≤y≤0.4, 0.4≤y≤0.5, 0.5≤y≤0.6, 0.6≤y≤0.7, 0.7≤y≤0.8, 0.8≤y≤0.9, or 0.9≤y<1 may be satisfied, for example.

In the above formula (3), the relationship of 0<z≤0.1, 0.1≤z≤0.2, 0.2≤z≤0.3, 0.3≤z≤0.4, 0.4≤z≤0.5, 0.5≤z≤0.6, 0.6≤z≤0.7, 0.7≤z≤0.8, 0.8≤z≤0.9, or 0.9≤z<1 may be satisfied, for example.

NCA may include at least one selected from the group consisting of LiNi_{0.7}Co_{0.1}Al_{0.2}O₂, LiNi_{0.7}Co_{0.2}Al_{0.1}O₂, LiNi_{0.8}Co_{0.1}Al_{0.1}O₂, LiNi_{0.8}Co_{0.17}Al_{0.03}O₂, LiNi_{0.8}Co_{0.15}Al_{0.05}O₂, and LiNi_{0.9}Co_{0.05}Al_{0.05}O₂, for example.

For example, the lithium-metal composite oxide may include a crystal structure that belongs to a space group C2/m and/or the like. For example, the lithium-metal composite oxide may have a composition of the following formula (4).

Li₂MO₃ (4)

In the above formula, M may include, for example, at least one selected from the group consisting of Ni, Co, Mn, and Fe.

For example, the lithium-metal composite oxide may include a crystal structure that belongs to a space group Fd-3m and/or the like. For example, the lithium-metal composite oxide may have a composition of the following formula (5) or the following formula (6).

LiMn₂₋ₓMₓO₄ (5)

In the above formula, the relationship of 0≤x≤2 is satisfied.

M may include, for example, at least one selected from the group consisting of Ni, Fe, and Zn.

Li₄₊ₓTi₅O₁₂ (6)

In the above formula, the relationship of -1≤x≤3 is satisfied.

For example, the lithium-metal composite oxide may include a polyanion compound. For example, the polyanion compound may include a phosphoric acid salt (such as LiFePO₄, for example), a silicic acid salt, a boric acid salt, and/or the like. For example, the polyanion compound may have a composition of the following formula (7), the following formula (8), the following formula (9), or the following formula (10).

LiMPO₄ (7)

Li₂₋ₓMPO₄F (8)

Li₂MSiO₄ (9)

LiMBO₃ (10)

In the above formulae (7) to (10), M may include, for example, at least one selected from the group consisting of Fe, Mn, and Co. In the above formula (8), the relationship of 0≤x≤2 may be satisfied, for example.

To the lithium-metal composite oxide, a dopant may be added. The dopant may be diffused throughout the entire particle, or may be locally distributed. For example, the dopant may be locally distributed on the particle surface. The dopant may be a substituted solid solution atom, or may be an intruding solid solution atom. The amount of the dopant to be added (the molar fraction relative to the total amount of the active material) may be from 0.01 to 5%, or from 0.1 to 3%, or from 0.1 to 1%, for example. A single type of dopant may be added, or two or more types of dopant may be added. The two or more dopants may form a complex.

The dopant may include, for example, at least one selected from the group consisting of B, C, N, a halogen, Si, Na, Mg, Al, Mn, Co, Cr, Sc, Ti, V, Cu, Zn, Ga, Ge, Se, Sr, Y, Zr, Nb, Mo, In, Pb, Bi, Sb, Sn, W, La, Ce, Pr, Nd, Pm, Sm, Eu, Gd, Tb, Dy, Ho, Er, Tm, Yb, Lu, and an actinoid.

### <Conductive Material>

The conductive material may form an electron conduction path inside the electrode composite material. The conductive material may include any component. The conductive material may include, for example, at least one selected from the group consisting of graphite, acetylene black (AB), Ketjenblack (registered trademark), vapor grown carbon fibers (VGCFs), carbon nanotubes (CNTs), and graphene flakes (GFs).

### <Binder>

The binder is capable of fixing the electrode composite material to the base material. The binder may include any component. The binder may include, for example, at least one selected from the group consisting of polyvinylidene difluoride (PVdF), vinylidene difluoride-hexafluoropropylene copolymer (PVdF-HFP), polytetrafluoroethylene (PTFE), carboxymethylcellulose (CMC), alginic acid, polyacrylic acid (PAA), polyacrylonitrile (PAN), polyvinyl alcohol (PVA), polyvinylpyrrolidone (PVP), polyoxyethylene alkyl ether, styrene-butadiene rubber (SBR), acrylate butadiene rubber (ABR), acrylic-based resin, methacrylic-based resin, and derivatives of these.

## Claims

1. A method of producing a recycled material, the method comprising, in the following order:
(a) preparing an electrode (10) including a base material (11) and an electrode composite material (12);
(b) bringing the electrode (10) into contact with an aqueous ammonia solution (20);
(c) separating the electrode composite material (12) from the base material (11); and
(d) drying the electrode composite material (12),
wherein
in the (a), the electrode composite material (12) is adhered to at least part of the base material (11),
the base material (11) includes aluminum, and
the electrode composite material (12) includes an active material.

2. The method of producing a recycled material according to claim 1, wherein the aqueous ammonia solution (20) includes ammonia in a mass fraction from 1 to 28%.

3. The method of producing a recycled material according to claim 1, wherein the active material includes a lithium-metal composite oxide.

4. The method of producing a recycled material according to any one of claims 1 to 3, wherein the (b) includes immersing the electrode (10) in the aqueous ammonia solution (20).

5. The method of producing a recycled material according to any one of claims 1 to 3, wherein the (b) includes applying the aqueous ammonia solution (20) to the electrode (10).

6. The method of producing a recycled material according to any one of claims 1 to 3, wherein the (b) includes spraying the aqueous ammonia solution (20) on the electrode (10).

7. The method of producing a recycled material according to any one of claims 1 to 3, wherein the (c) includes applying momentum to the electrode composite material (12).

8. The method of producing a recycled material according to any one of claims 1 to 3, wherein the (d) includes collecting ammonia from gas generated during the drying.

9. The method of producing a recycled material according to any one of claims 1 to 3, further comprising, in the following order:
(e) separating the active material from the electrode composite material (12); and
(f) recycling the active material.

10. A production system (100) operable to produce a recycled material from an electrode (10) including a base material (11) and an electrode composite material (12), the production system comprising:
a contacting apparatus (110);
a separating apparatus (120); and
a drying apparatus (130), wherein
the contacting apparatus (110) is to bring the electrode (10) into contact with an aqueous ammonia solution (20),
the separating apparatus (120) is to separate the electrode composite material (12) from the base material (11) after the electrode (10) is brought into contact with the aqueous ammonia solution (20), and
the drying apparatus (130) is to dry the electrode composite material (12) after the electrode composite material (12) is separated from the base material (11).

11. The production system according to claim 10, wherein
the production system further comprises a collecting apparatus (140), and
the collecting apparatus (140) is to collect ammonia from gas generated in the drying apparatus (130).
